# EUROPÄISCHE PATENTSCHRIFT

(11) **EP 3 832 819 B1**
(45) Veröffentlichungstag und Bekanntmachung des Hinweises auf die Patenterteilung: **26.02.2025**
(21) Anmeldenummer: 20210224.0
(22) Anmeldetag: 27.11.2020
(51) Int. Cl.: H02G 3/18, F16B 35/02, F16B 21/18

(54) **UNTERFLURINSTALLATIONSBAUTEIL**
UNDERFLOOR INSTALLATION COMPONENT
COMPOSANT D'INSTALLATION SOUS PLANCHER

(30) Priorität: 06.12.2019 DE 202019106807 U
(43) Veröffentlichungstag der Anmeldung: 09.06.2021
(73) Patentinhaber: OBO Bettermann Hungary Kft., 2347 Bugyi (HU)
(72) Erfinder: Ruhr, Siegfried, 51674 Wiehl (DE)
(74) Vertreter: Haverkamp Patentanwälte PartG mbB

(56) Entgegenhaltungen:
- EP-B1- 2 083 490
- CN-A- 103 438 076
- CN-U- 207 830 321
- GB-A- 2 443 897
- KR-A- 20190 119 403
- US-A- 4 784 554

## Beschreibung

Die Erfindung betrifft ein Unterflurinstallationsbauteil mit einem vor seinem Einbau in einen insbesondere durch Gießen zu erstellenden Fußboden durch Nivellierschrauben bodenseitig abgestützten Rahmen, welche Nivellierschrauben mit ihrem Gewinde jeweils ein komplementäres Gewinde des Rahmens kämmen.

Unterflurinstallationsbauteile dienen zum Erstellen von Unterflurinstallationssystemen, insbesondere für elektrische Unterflurinstallationen. Bei den Unterflurinstallationsbauteilen kann es sich um Kanäle, Kanalformteile, etwa zur Richtungsänderung, Unterfluranschlussdosen oder dergleichen handeln. Ein solches Unterflurinstallationssystem ist in den Fußbodenaufbau integriert und daher mitunter auch im Estrich vergossen. Unterflurinstallationsbauteile, die estrichbündig verlegt werden sollen, müssen auf Erstrichniveau nivelliert werden, bevor der Estrich zur Erstellung des Bodens gegossen wird. Zu diesem Zweck verfügen zu nivellierende Unterflurinstallationsbauteile über einen Nivellierrahmen als oberseitigen Abschluss, etwa eines Kanals oder einer Unterfluranschlussdose. In einer Unterfluranschlussdose werden an dem Nivellierrahmen Geräteeinbaueinheiten, Mediensäulen, Deckel oder dergleichen angebracht. Zum Nivellieren eines solchen Rahmens sind an diesem mehrere Nivellierschrauben angeordnet, die sich gemäß einer vorbekannten Ausgestaltung an einem Bodenblech des Unterflurinstallationsbauteils abstützen. Das Bodenblech seinerseits ist zweckmäßigerweise mit Schrauben untergrundseitig festgelegt. Um ein Eindringen von Estrich in ein solches Unterflurinstallationsbauteil zu verhindern, sind zwischen dem Nivellierrahmen und Bodenblech Seitenteile als Schalungselemente angeordnet. Als Seitenteile werden u. a. Seitenschürzen aus einem flexiblen Material eingesetzt.

Bei derartigen Unterflurinstallationsbauteilen kann es sich beispielsweise um Unterflurgerätedosen handeln. Bei höhennivellierbaren Unterflurinstallationsbauteilen, wie etwa Unterflurgerätedosen, ist die Länge der Nivellierschrauben mitunter auf die voraussichtliche Höhe des Rahmens oberhalb des Unterbodens abgestimmt. Die Variabilität dieser Höhe ist jedoch recht groß. Daher werden derartige Unterflurinstallationsbauteile auch mit relativ langen Gewindestangen als Nivellierschrauben ausgerüstet. Die nicht benötigten Gewindeteilabschnitte müssen nach der Nivellierung abgetrennt werden. Aus EP 2 083 490 B1 ist eine Unterflurgerätedose für elektrische Installationen bekannt, bei der eine Höhenschnellverstellung möglich ist. Wenn eine größere Höhe zu überbrücken ist, kann der Gewindeeingriff der Nivellierschrauben in das komplementäre Gewinde des Rahmens gelöst werden, sodass dann der Rahmen gegenüber den Nivellierschrauben bzw. die Nivellierschrauben gegenüber dem Rahmen in längsaxialer Richtung translatorisch verstellbar sind. Zu diesem Zweck verfügt der Rahmen dieser vorbekannten Unterflurgerätedose über ein sich etwa über 180° erstreckendes Innengewindesegment, welches von dem Gewinde an der Nivellierschraube gekämmt wird. Der diesem Gewindesegment zur Vervollständigung der Nivellierschraubenführung gegenüberliegende Teil ist glatt ausgeführt. Die Höhenschnellverstellung lässt sich dadurch herbeiführen, dass das Gewindesegment aus seiner das Gewinde der Nivellierschraube kämmenden Stellung in radialer Richtung abgerückt wird. Bewirken kann man dieses mit einer schaftförmigen Handhabe, die in eine diesbezüglich vorbereitete Öffnung des Rahmens eingesetzt und gegen eine Stellschräge, außenseitig an dem Gewindesegment angeformt, wirkt, wodurch dieses Gewindesegment in radialer Richtung von der Nivellierschraube wegbewegt wird.

Eine Nivellierschraube ist beispielsweise gezeigt durch US 4,784,554 B, aus GB 2 443 897 A, CN 207830321 U und CN 103438076 A. Eine gattungsgemäße Unterflurdose ist gezeigt in EP 2083490 B1.

Auch wenn mit einer solchen Unterflurgerätedose eine Höheneinrichtbarkeit des Rahmens rascher bewirkt werden kann, ist hierdurch das Problem, wie mit zu langen Gewindestangen umgegangen werden soll, noch nicht gelöst. Problematisch ist auch ein solches Unterflurinstallationsbauteil, beispielsweise als Unterflurgerätedose ausgeführt, welches mit Nivellierschrauben ausgerüstet ist, deren Länge für die tatsächlichen Anforderungen auf der Baustelle nicht ausreichen. Dann besteht nur die Möglichkeit, die vorhandenen Nivellierschrauben durch längere zu ersetzen. Bei einer Unterflurgerätedose, wie aus EP 2 083 490 B1 bekannt, kann hierzu die Schnellverstellung genutzt werden, sodass die Gewindestangen nicht über ihre gesamte Länge aus- und eingeschraubt werden müssen.

Ausgehend von diesem diskutierten Stand der Technik liegt der Erfindung die Aufgabe zugrunde, die Problematik der Länge der Nivellierschrauben bei einem solchen Unterflurinstallationsbauteil zu lösen, ohne dass vorhandene Nivellierschrauben ersetzt oder abgetrennt werden müssten und dass eine Anpassung eines Unterflurinstallationsbauteils an eine Verwendung unterschiedlich langer Nivellierschrauben, auch ohne dass das Unterflurinstallationsbauteil eine Höhenschnellverstellung hat, rasch und problemlos möglich ist.

Gelöst wird diese Aufgabe erfindungsgemäß durch ein eingangs genanntes, gattungsgemäßes Unterflurinstallationsbauteil mit den Merkmalen des Patentanspruchs 1.

Die Nivellierschrauben dieses Installationsbauteils sind als Einzelmodule ausgelegt, und zwar dergestalt, sodass jeweils zwei Nivellierschrauben miteinander zur Verlängerung der effektiven Länge verbunden werden können. Durch axiales Verbinden von zwei Nivellierschrauben gleicher Länge, wird somit die effektive Länge verdoppelt. Gleichfalls kann ohne Weiteres auch eine durch mehrere, miteinander verbundene Nivellierschrauben eine oder auch mehrere entfernt werden, um die effektive Länge zu verkürzen. Zum Zwecke einer axialen Verbindung von jeweils zwei Nivellierschrauben verfügt eine solche Nivellierschraube an ihrem einen Ende über ein erstes Verbindungsmittel und an ihrem anderen Ende über ein zweites Verbindungsmittel. Die beiden Verbindungsmittel sind komplementär zueinander ausgeführt, sodass das erste Verbindungsmittel einer ersten Nivellierschraube in Eingriff gestellt werden kann mit dem zweiten Verbindungsmittel einer zweiten Nivellierschraube. Jede Nivellierschrauben verfügt über diese Verbindungsmittel, sodass mehrere Nivellierschrauben zur Ausbildung auch längerer Gewindestangen zusammengesteckt werden können. Die Verbindungsmittel erstrecken sich in axialer Richtung, sodass zwei Nivellierschrauben mit ihrer Längsachse miteinander fluchtend miteinander verbunden werden können. Als erstes Verbindungselement ist eine axiale Anschlussbuchse als weibliches Steckverbinderteil vorgesehen. Als komplementäres Verbindungsmittel dient ein von dem Gewindeabschluss abragender axialer Steckzapfen als männliches Steckverbinderteil. Den Verbindungsmitteln zugehörig sind Drehmomentübertrager, durch die, wenn miteinander in Eingriff gestellt, ein Drehmoment von der einen Nivellierschraube auf die mit dieser verbundenen Nivellierschraube übertragen wird. Um zwei durch ihre Verbindungsmittel miteinander in Eingriff gestellte Nivellierschrauben zu fixieren und somit für die erforderlichen Zwecke zusammenzuhalten, sind Haltemittel vorgesehen, durch das oder die der Eingriff eines Steckzapfens in eine Anschlussbuchse fixiert ist. Bei diesen Haltemitteln kann es sich beispielsweise um eine Rastfixierung der beiden miteinander in Eingriff gestellten Nivellierschrauben handeln, beispielsweise unter Verwendung eines an dem Steckzapfen gehaltenen, offenen Federstahlringes, der in eine komplementäre Nut der Anschlussbuchse einspringt. Möglich ist auch eine Schraubverbindung zweier miteinander in Eingriff gestellter Nivellierschrauben mittels einer zusätzlichen Verbindungsschraube. Möglich ist es auch, die Verbindungsmittel an einer solchen Nivellierschraube auszulegen, dass zwei Nivellierschrauben durch eine Steck-DrehVerbindung miteinander in Eingriff gestellt werden. Die die beiden Nivellierschrauben in längsaxialer Richtung verriegelnde Drehstellung ist dann beispielsweise durch eine Rastung oder durch einen Reibschluss fixiert.

Eines der beiden Verbindungsmittel kann zudem genutzt werden, um daran einen Fuß zum bodenseitigen Abstützen der Nivellierschraube oder der aus mehreren derartigen Nivellierschrauben zusammengesetzten Gewindestange anschließen zu können. Zu diesem Zweck kann beispielsweise der Steckzapfen dienen, der in eine entsprechende Steckzapfenaufnahme eines Fußes eingreift. Zum Anschluss des Fußes dienen typischerweise dieselben Haltemittel, mit denen eine erste Nivellierschraube an eine zweite angeschlossen wird.

Das nicht für einen Fußanschluss genutzte und somit nach oben weisende Verbindungsmittel ist vorzugsweise mit Mitteln ausgerüstet, damit für die Zwecke des Nivellierens mit einem Werkzeug ein Drehmoment in die Nivellierschraube eingebracht werden kann. Hierbei kann es sich beispielsweise um einen in der Anschlussbuchse befindlichen Mehrkantzapfen handeln. Diesen wird man typischerweise sechskantig auslegen, damit auf diesen eine handelsübliche Nuss aufgesetzt werden kann. Ein solcher Zapfen kann zudem eine eingeprägte Drehmitnahmekontur in seiner Stirnfläche aufweisen, beispielsweise eine Kreuzstruktur, damit ein Drehmoment auch über einen Schraubendreher eingebracht werden kann.

Ein mit derartigen Nivellierschrauben ausgerüstetes Unterflurinstallationsbauteil kann beispielsweise vor Ort auf der Baustelle durch simples Verlängern der werksseitig an dem Rahmen befindlichen Nivellierschrauben durch Anschließen einer oder mehrerer weiterer Nivellierschrauben auf die gewünschte Länge gebracht werden. Ist im umgekehrten Falle herstellerseitig ein solches Unterflurinstallationsbauteil mit aus mehreren derartigen Nivellierschrauben zusammengesetzten Gewindestangen ausgerüstet, können vor Ort problemlos die nicht benötigten abgenommen werden. Die in einem solchen Fall abgenommenen Nivellierschrauben sind selbstverständlich weiter einsetzbar und können an anderen Unterflurinstallationsbauteilen zur Verlängerung vorhandener Nivellierschrauben verwendet werden. Die einzelnen Nivellierschrauben können in einer einzigen Länge zur Verfügung gestellt werden. Durchaus möglich ist es jedoch auch, dass Nivellierschrauben mit unterschiedlicher Länge zur Verfügung stehen, um die zum Nivellieren benötigten Gewindestangen in ihre gewünschte Länge passgenauer einzurichten. Vorteilhaft bei diesem Konzept ist auch, dass die bei herkömmlichen Unterflurinstallationsbauteilen relativ langen aus den Rahmen der Unterflurinstallationsbauteile herausragenden Gewindestangen nicht erforderlich sind, was sich günstig auf eine Verpackung, die Lagerhaltung und den Transport auswirkt. Aufgrund der problemlosen Montage zweier Nivellierschrauben kann das Unterflurinstallationsbauteil an jeder bodenseitigen Abstützstelle beispielsweise mit einer Nivellierschraube das komplementäre rahmenseitige Gewinde oder Gewindesegment kämmend ausgerüstet sein und zusammen mit einer gewissen Anzahl an weiteren Nivellierschrauben für mögliche Anpassungen ausgeliefert werden.

Als Drehmomentübertrager ist vorgesehen, dass in der Anschlussbuchse zentrisch ein Drehmitnahmezapfen mit nicht-rotationssymmetrischer Mantelfläche angeordnet ist. Bei einer solchen nicht-rotationssymmetrischen Mantelfläche kann es sich beispielsweise um einen Mehrkant, etwa einen Sechskant handeln. Dieser Drehmitnahmezapfen kann als Antriebskulisse für das Einbringen eines Drehmomentes in die Nivellierschraube genutzt werden. Der Steckzapfen als komplementäres Verbindungsmittel verfügt dann über eine zentrische Drehmitnahmezapfenaufnahme, deren Querschnittsgeometrie ausgelegt ist, damit der in diese eingreifende Drehmitnahmezapfen darin drehmomentschlüssig aufgenommen ist. Ist der Drehmitnahmezapfen mit einem Außensechskant ausgerüstet, wird man die Querschnittsgeometrie der Drehmitnahmezapfenaufnahme als Innensechskant komplementärer Größe ausführen.

In einer Weiterbildung ist vorgesehen, dass die komplementären Verbindungsmittel jeweils eine mechanische Verbindungskodierung tragen. Diese Verbindungskodierung ist ausgelegt, damit zwei Nivellierschrauben bezogen auf die Längsachse winkelrichtig miteinander verbunden werden, und zwar bezogen auf die Durchgängigkeit des Gewindes. Dieses bedeutet, dass der oder die Gewindegänge einer ersten Nivellierschraube sich in dem oder den Gewindegängen einer zweiten, mit der ersten Nivellierschraube verbundenen Nivellierschraube fortsetzen. Dabei ist es nicht erforderlich, dass die Enden der Gewindegänge der beiden Nivellierschrauben unmittelbar aneinandergrenzen. Zwischen den jeweiligen Enden kann durchaus ein Winkelabstand vorgesehen sein. Eine solche Gewindegangunterbrechung beeinträchtigt die Funktion nicht, da das komplementäre Innengewinde am Rahmen des Unterflurinstallationsbauteils regelmäßig in mehrere Gewindegänge eingreift. Bei einer solchen mechanischen Verbindungskodierung kann es sich beispielsweise durch eine sich in längsaxialer Richtung erstreckende Nut des einen Verbindungsmittels handeln, in das ein von dem anderen Verbindungsmittel getragener Kodierkörper, beispielsweise ein eine gewisse Längserstreckung aufweisender Wulst, eingreift. Bei einer solchen Verbindungskodierung stehen die beiden Kodierelemente ebenfalls drehmomentschlüssig, bezogen auf eine Drehbewegung der beiden miteinander verbundenen Nivellierschrauben, in Eingriff. Aus diesem Grunde ist in einer Ausgestaltung vorgesehen, dass die mechanische Verbindungskodierung zugleich Drehmomentübertrager sind und bei einer solchen Auslegung der Nivellierschraube keine Drehmitnahmezapfenaufnahme bei einem der beiden Verbindungsmitteln benötigt wird. Das Vorsehen eines Zapfens als Antrieb zum Induzieren eines Drehmomentes in der Anschlussbuchse ist auch bei einer solchen Auslegung zweckmäßig.

Die vorbeschriebenen Nivellierschrauben sind, soweit nicht anders beschrieben, vorzugsweise aus einem für diese Zwecke geeigneten Kunststoff hergestellt, beispielsweise aus einem Kunststoff, mit dem derartige Nivellierschrauben derzeitig hergestellt werden. Das Herstellen derartiger Nivellierschrauben aus Kunststoff ist kostengünstig. Zudem weisen diese sodann nur ein relativ geringes Gewicht auf, was vorteilhaft in Bezug auf Transportkosten ist.

Nachfolgend ist die Erfindung anhand von Ausführungsbeispielen unter Bezugnahme auf die beigefügten Figuren beschrieben. Es zeigen:
- **Fig. 1:**: eine perspektivische Ansicht eines Eckstückes eines Unterflurinstallationsbauteils mit einer aus mehreren Nivellierschrauben zusammengesetzten Gewindestange,
- **Fig. 2:**: eine perspektivische Ansicht einer der Nivellierschrauben der Gewindestange des Unterflurinstallationsbauteils der Figur 1,
- **Fig. 3:**: einen Längsschnitt der Nivellierschraube der Figur 2,
- **Fig. 4:**: eine Draufsicht auf das in Figur 2 gezeigte obere Ende der Nivellierschraube,
- **Fig. 5:**: eine Unteransicht der Nivellierschraube der Figur 2,
- **Fig. 6:**: eine Schnittdarstellung durch zwei miteinander in Eingriff gestellte Nivellierschrauben,
- **Fig. 7:**: eine Nivellierschraube für ein Unterflurinstallationsbauteil in einer nicht erfindungsgemäßen Ausgestaltung,
- **Fig. 8:**: die Nivellierschraube der Figur 7 nach Art einer Explosionsdarstellung,
- **Fig. 9:**: eine Längsschnittdarstellung der Nivellierschraube der Figuren 7 und 8,
- **Fig. 10:**: eine perspektivische Ansicht des oberen Endes der Nivellierschraube der Figur 7,
- **Fig. 11:**: eine perspektivische Ansicht des unteren Endes der Nivellierschraube der Figur 7 und
- **Fig. 12:**: eine Längsschnittdarstellung durch zwei miteinander in Eingriff gestellte Nivellierschrauben gemäß Figur 7.

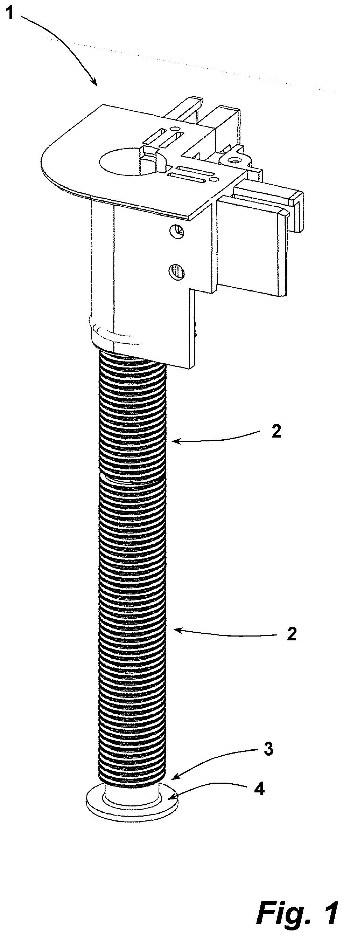

Figur 1 zeigt ein Eckstück 1 eines im Übrigen nicht näher dargestellten Unterflurinstallationsbauteils. Das in der Figur gezeigte Eckstück 1 ist Teil einer im Übrigen nicht näher dargestellten Unterflurgerätedose. Diese umfasst vier Eckstücke der in Figur 1 gezeigten Art, die durch Rahmenstücke miteinander verbunden sind. Die Eckstücke 1 bilden mit den diese verbindenden Rahmenstücken einen Nivellierrahmen aus. Der Nivellierrahmen ist an den Eckstücken 1 bodenseitig abgestützt. Zur bodenseitigen Abstützung des Nivellierrahmens dienen Nivellierschrauben 2, wobei bei dem in Figur 1 dargestellten Ausführungsbeispiel zwei Nivellierschrauben 2 zur Ausbildung einer längeren Nivellierschraube bzw. einer Gewindestange axial miteinander verbunden sind. An die untere Nivellierschraube 2 ist ein Fuß 3 mit einem bodenseitig aufstehenden Teller 4 angeschlossen. Die Nivellierschrauben 2 tragen ein Außengewinde, welches bei dem dargestellten Ausführungsbeispiel eingängig ausgebildet ist. Die obere Nivellierschraube 2 kämmt ein in dem Eckstück 1 integriertes Gewindesegment, sodass durch Drehen der durch die Nivellierschrauben 2 gebildeten Gewindestange der Abstand des Eckstücks 1 zu dem Fuß 3 und damit die Höhe des Nivellierrahmens gegenüber dem Boden durch entsprechendes Ein- oder Ausschrauben der Nivellierschrauben 2 eingerichtet werden kann.

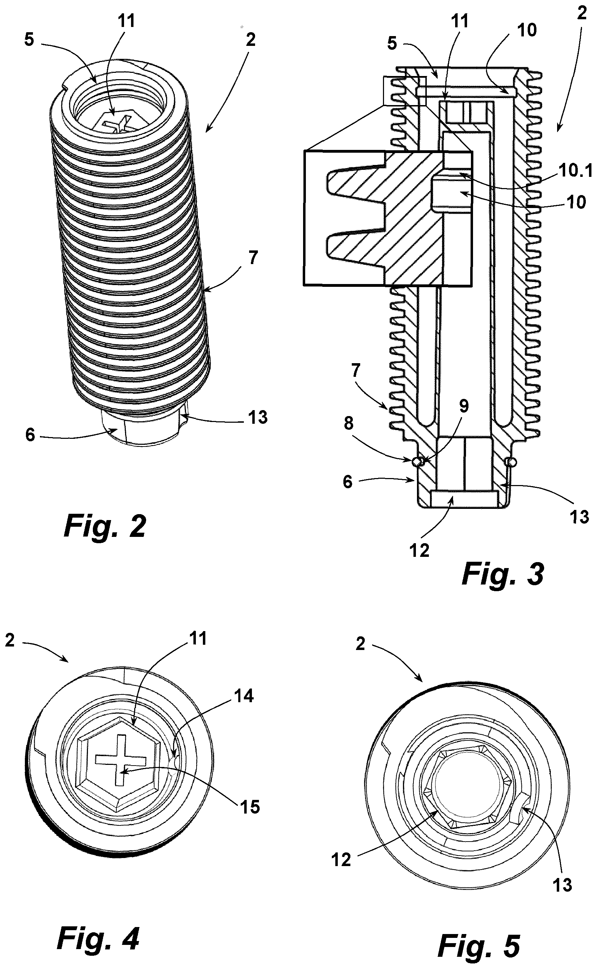

Nachfolgend ist die Nivellierschraube 2 unter Bezugnahme auf die Figuren 2 bis 6 näher beschrieben. Die Nivellierschraube 2 ist als Modul ausgebildet, um diese mit weiteren gleichartigen Nivellierschrauben 2 zur Verlängerung der effektiven Länge einer an einem Eckstück 1 angeordneten Gewindestange miteinander verbinden zu können. Die Nivellierschrauben 2 werden, wie bereits aus Figur 1 ersichtlich, axial miteinander verbunden. Zu diesem Zweck verfügt die Nivellierschraube 2 über erste und zweite Verbindungsmittel. Bei dem ersten Verbindungsmittel handelt es sich um eine axiale Anschlussbuchse 5, deren oberseitige Öffnung in Figuren 2 und 3 zu erkennen ist. Die Anschlussbuchse 5 verfügt über eine zylindrische Mantelfläche, die in den Kern der Nivellierschraube 2 eingebracht ist. An dem gegenüberliegenden Ende der Nivellierschraube 2 ist als zweites Verbindungsmittel ein Steckzapfen 6 angeordnet. Dieser ragt von dem unteren Abschluss des Gewindeganges 7 in axialer Richtung ab, setzt mithin den Kern der Nivellierschraube 2 in dieser Richtung fort (siehe Figur 3). Der Steckzapfen 6 ist dimensioniert, dass dieser in die Anschlussbuchse 5 einer zweiten Nivellierschraube 2 einpasst.

Zur Fixierung von zwei mit ihren Verbindungsmitteln 5, 6 in Eingriff gestellten Nivellierschrauben 2 dient bei dem dargestellten Ausführungsbeispiel ein offener Federstahlring 8, der in einer umlaufenden Nut 9 des Steckzapfens 6 gehalten ist. Anstelle eines solchen Federstahlringes kann auch ein Elastomerring vorgesehen sein. Ist der Steckzapfen 6 in eine Anschlussbuchse 5 einer zweiten Nivellierschraube 2 eingesetzt, greift dieser in einer in die innere Mantelfläche der Anschlussbuchse 5 eingebrachte Ringnut 10 ein. Zwei Nivellierschrauben 2 sind auf diese Weise durch eine Rastverbindung in ihrer In-Eingriffs-Stellung fixiert. Wie aus der Ausschnittsvergrößerung der Figur 3 erkennbar, ist die Ringnut 10 mit asymmetrischer Querschnittsfläche ausgeführt. Die Neigung der zur Mündung der Anschlussbuchse 5 weisenden Flanke ist gegenüber einer Vertikalen weniger stark geneigt als die andere Flanke. Über die Neigung dieser Flanke 10.1 können die Lösekräfte eingestellt werden, die erforderlich sind, um zwei miteinander in Eingriff gestellte Nivellierschrauben 2 voneinander abziehen zu können. Anstelle eines Elastomerringes kann beispielsweise auch ein offener Federstahlring oder ein anderes Verrastungsmittel eingesetzt sein. In Abhängigkeit von der gewünschten Rückhaltekraft wird man diese Rastverbindung auslegen.

Die Nivellierschraube 2 verfügt über Drehmomentübertrager, wobei jeweils ein Drehmomentübertrager jedem Verbindungsmittel und somit der Anschlussbuchse 5 sowie dem Steckzapfen 6 zugeordnet ist. Innerhalb der Anschlussbuchse 5 befindet sich als Drehmomentübertrager ein Drehmitnahmezapfen 11, der bei dem dargestellten Ausführungsbeispiel eine Außensechskantkontur aufweist (siehe auch Figur 4). Der Drehmitnahmezapfen 11 erstreckt sich, wie aus der Schnittdarstellung der Figur 3 erkennbar, bis etwa zur Ringnut 10 und endet daher vor dem oberen Abschluss der Nivellierschraube 2. Der Drehmitnahmezapfen 11 ist zentrisch innerhalb der Anschlussbuchse 5 angeordnet. Als komplementären Drehmomentübertrager ist in den Steckzapfen 6 eine Drehmitnahmezapfenaufnahme 12 eingebracht, deren innere Mantelfläche komplementär zu der Sechskantmantelfläche des Drehmitnahmezapfens 11 ausgeführt ist. Ist der Steckzapfen 6 in einer Anschlussbuchse 5 einer zweiten Nivellierschraube 2 eingesetzt, greift der Drehmitnahmezapfen 11 in die Drehmitnahmezapfenaufnahme 12 ein. Auf diese Weise sind zwei miteinander mit ihren Verbindungsmitteln in Eingriff gestellte Nivellierschrauben 2 drehmomentschlüssig miteinander verbunden.

Die Nivellierschraube 2 verfügt ferner über eine mechanische Verbindungskodierung, sodass sein Steckzapfen 6 nur in einer einzigen Winkelstellung, bezogen auf die Längsachse der Nivellierschraube 2, in die Anschlussbuchse 5 einer zweiten Nivellierschraube 2 eingesetzt werden kann. Der Steckzapfen 6 verfügt zu diesem Zweck über eine seiner Längserstreckung folgende Kodiernut 13. Komplementär hierzu ragt von der Innenwand der Anschlussbuchse 5 ein der Längserstreckung der Nivellierschraube 2 folgender Kodierwulst 14 als Kodierkörper ab. Dieses gewährleistet, dass eine erste Nivellierschraube 2 mit ihrem Steckzapfen 6 nur in einer einzigen Winkelstellung bezogen auf ihre Längsachse in eine Anschlussbuchse 5 einer zweiten Nivellierschraube 2 eingesetzt werden kann. Eine solche mechanische Verbindungskodierung ist vorgesehen, um zu gewährleisten, dass der Gewindegang 7 einer ersten Nivellierschraube 2 in denjenigen der zweiten Nivellierschraube 2 übergeht, um ein Kämmen des im Eckstück 1 des Nivellierrahmens befindlichen Gewindesegmentes auch über die Schnittstelle zwischen zwei Nivellierschrauben 2 zu gewährleisten. Bei einer Ausgestaltung einer Nivellierschraube, deren Gewinde zweigängig aufgebaut ist, kann eine solche mechanische Verbindungskodierung auch mit zwei möglichen Winkelstellungen der miteinander zu verbindenden Nivellierschrauben vorgesehen sein.

Der Außensechskant des Drehmitnahmezapfens 11 dient zugleich als Antrieb, um in die in Figur 1 gezeigte obere Nivellierschraube 2 mittels eines entsprechenden Werkzeuges, beispielsweise einer Nuss, ein Drehmoment zum Höheneinrichten des Nivellierrahmens einbringen zu können. Aufgrund der drehmomentschlüssigen Verbindung dieser Nivellierschraube 2 mit der unteren Nivellierschraube 2 wird diese entsprechend mitgedreht, sodass die miteinander verbundenen Nivellierschrauben 2 gemeinsam eine kontinuierliche Gewindestange darstellen. Bei dem dargestellten Ausführungsbeispiel ist in die Stirnfläche des Drehmitnahmezapfens 11 zudem eine Kreuz-Schlitz-Kontur 15 als Drehmitnahmekontur eingebracht, sodass ein Drehmoment auch mittels eines Schraubendrehers eingebracht werden kann.

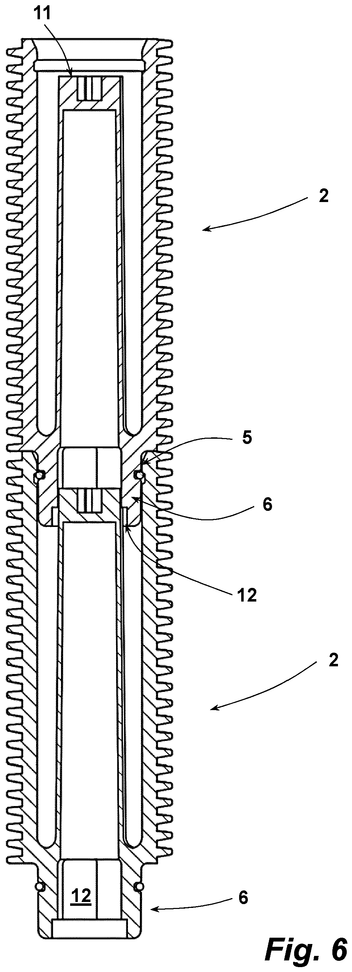

Figur 6 zeigt zwei miteinander zum Ausbilden der in Figur 1 gezeigten Gewindestange miteinander in Eingriff gestellten Nivellierschrauben 2. Die vorbeschriebene In-Eingriff-Stellung des Steckzapfens 6 der oberen Nivellierschraube 2 in die Anschlussbuchse 5 der unteren Nivellierschraube 2 ist darin deutlich zu erkennen.

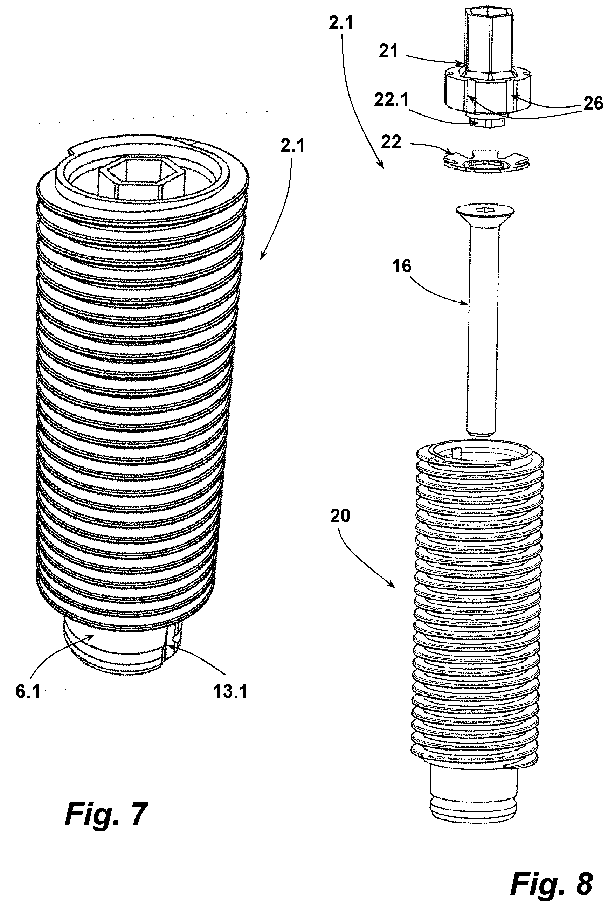

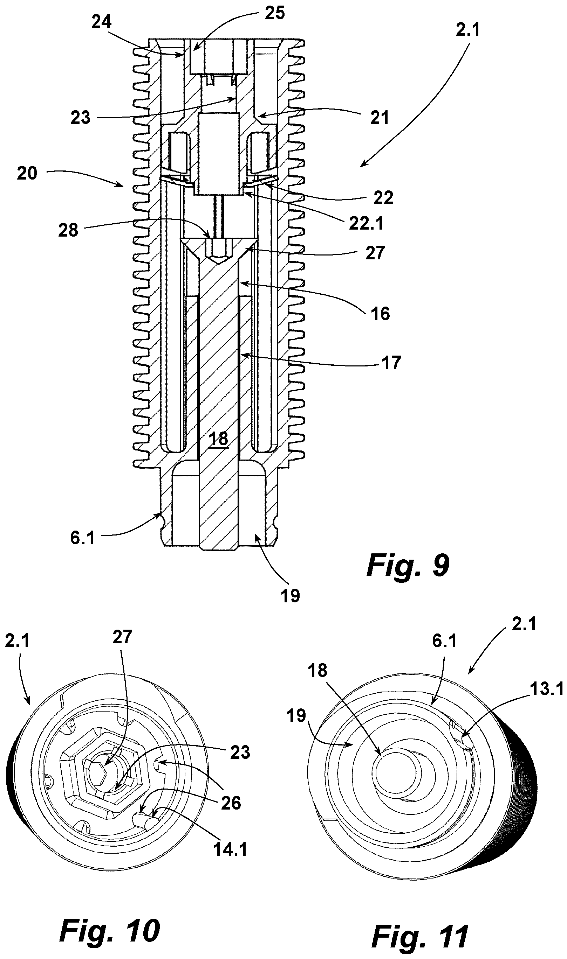

Figur 7 zeigt ein Ausführungsbeispiel einer nicht erfindungsgemäßen Nivellierschraube 2.1. Diese ist prinzipiell aufgebaut wie die Nivellierschraube 2 des vorstehend beschriebenen Ausführungsbeispieles. Die Nivellierschraube 2.1 unterscheidet sich von der Nivellierschraube 2 dadurch, dass für die axiale Fixierung zweier miteinander in Eingriff gestellter Nivellierschrauben 2.1 eine Verbindungsschraube 16 vorgesehen ist. Dieses Ausführungsbeispiel einer Nivellierschraube 2.1 ist in den Figuren 7 bis 12 gezeigt. Bei dieser Nivellierschraube 2.1 dient die Verbindungskodierung mit ihrer Kodiernut 13.1 und ihrem Kodierwulst 14.1 auch zur Drehmitnahme, insbesondere dann, wenn die Verbindungsschraube 16 nur lose gespannt ist. Die Verbindungsschraube 16 ist, wie in der Schnittdarstellung der Figur 9 erkennbar, in einer Schraubenführung 17 längsaxial verschiebbar gehalten. Der Steckzapfen 6.1 der Nivellierschraube 2.1 ist als Ringstruktur ausgebildet. Der Gewindeschaft 18 der Verbindungsschraube 16 ragt in den durch die Ringstruktur des Steckzapfens 6.1 bereitgestellten Freiraum 19 mit axialer Erstreckung hinein. Innerhalb des hülsenförmigen, außenseitig das Gewinde 7.1 tragenden Grundkörper 20 der Nivellierschraube 2 ist ein Gewindebuchsenbauteil 21 eingesetzt (siehe Figuren 8 und 9). Das Gewindebuchsenbauteil 21 ist in dem inneren Hohlkanal des Grundkörpers 20 durch eine Sperrscheibe 22 gehalten. Die Sperrscheibe 22 ist nach Art einer Tellerfeder ausgeführt und sitzt auf einem axialen Fortsatz 22.1 des Gewindebuchsenbauteils 21. Der Fortsatz 22.1 bildet in Richtung zu dem Innengewinde 23 des Gewindebuchsenbauteils 21 einen Absatz als Anlage für die Sperrscheibe 22. Auch in die andere axiale Richtung ist die Sperrscheibe 22 an dem Fortsatz 22.1 kraft- und/oder formschlüssig angeschlossen. Die Sperrscheibe 22 sitzt radial außenseitig auf einem oder auch mehreren nach innen abragenden Vorsprüngen der Mantelfläche des Grundkörpers 20. Auf diese Weise ist das Gewindebuchsenbauteil 21 in beide axialen Richtungen mit dem Grundkörper 20 der Nivellierschraube 2.1 verriegelt.

Das Gewindebuchsenbauteil 21 verfügt über einen Innengewindeabschnitt 23 mit einem zu dem Gewinde der Verbindungsschraube 16 komplementären Gewinde. Das Gewindebuchsenbauteil 21 befindet sich an der Stelle, an der sich bei der Nivellierschraube 2 der Drehmitnahmezapfen 11 angeordnet ist. Das Gewindebuchsenbauteil 21 ist ebenfalls mit einer Außensechskantkontur ausgeführt, um ein Drehwerkzeug zum Einbringen eines Drehmomentes in die Nivellierschraube 2.1 ansetzen zu können. Bei dem dargestellten Ausführungsbeispiel ist in einem oberen Abschnitt des Gewindebuchsenbauteils 21 zudem mit einer Innensechskantkontur 25 ausgestattet, sodass ein Drehmoment auch mit einem Steckschlüssel in die Nivellierschraube 2.1 eingebracht werden kann. Das Gewindebuchsenbauteil 21 ist in dem inneren Hohlkanal des Grundkörpers 20 drehmomentschlüssig gehalten. Genutzt wird hierfür der Kodierwulst 14.1. Das Gewindebuchsenbauteil 21 verfügt über einen äußeren Führungsring, der an der inneren Mantelfläche des Hohlkanals abgestützt ist. In diesen sind mehrere Ausnehmungen 26 eingebracht, in die, wie aus Figur 10 erkennbar, der Kodierwulst 14.1 eingreift. Es sind mehrere Ausnehmungen 26 vorgesehen, damit eine Montage des Gewindebuchsenbauteils 21 in dem Hohlkanal des Grundkörpers 20 in mehreren Winkelpositionen möglich ist.

Wie aus der Schnittdarstellung der Figur 9 erkennbar, ist der Kopf 27 der Verbindungsschraube 16 mit einem Steckschlüssel durch die Gewindebuchse 21 hindurch erreichbar. Als Drehmitnahmekontur ist in den Kopf 27 eine Innensechskantkontur 28 eingeprägt.

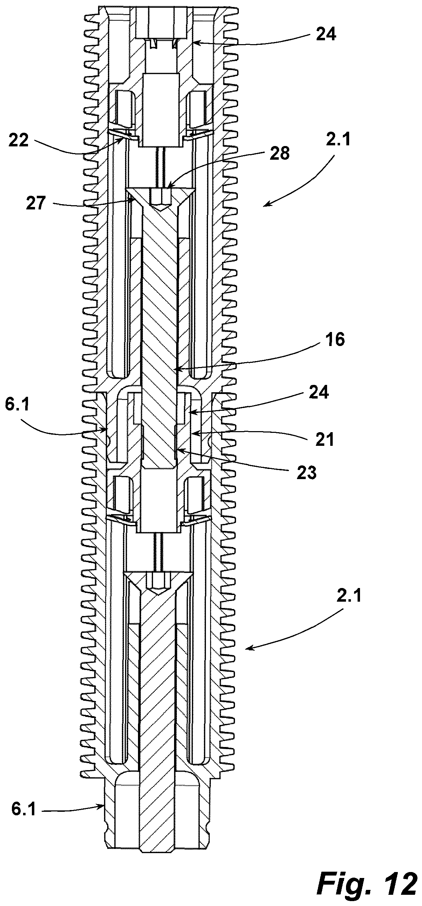

Zwei miteinander mit ihren Verbindungsmitteln in Eingriff gestellte Nivellierschrauben 2.1 sind in Figur 12 in einem Längsschnitt gezeigt. Die Verbindungsschraube 16 der oberen Nivellierschraube 2.1 ist in den Innengewindeabschnitt 23 des Gewindebuchsenbauteils 21 eingeschraubt. Verspannt ist die Verbindungsschraube 16 mit dem Gewindebuchsenbauteil 21 noch nicht. Gleichwohl sind durch die miteinander in Eingriff gestellten Kodierelemente - die Kodiernut 13.1 mit dem Kodierwulst 14.1 - beide Nivellierschrauben 2.1 bereits drehmomentschlüssig miteinander verbunden.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die beschriebene Erfindung umzusetzen, ohne dass dieses im Rahmen dieser Ausführungen näher erläutert werden müsste.

### Bezugszeichenliste

- 1: Eckstück
- 2, 2.1: Nivellierschraube
- 3: Fuß
- 4: Teller
- 5: Anschlussbuchse
- 6, 6.1: Steckzapfen
- 7, 7.1: Gewindegang
- 8: Federstahlring
- 9: Nut
- 10: Ringnut
- 10.1: Flanke
- 11: Drehmitnahmezapfen
- 12: Drehmitnahmezapfenaufnahme
- 13, 13.1: Kodiernut
- 14, 14.1: Kodierwulst
- 15: Kreuz-Schlitz-Kontur
- 16: Verbindungsschraube
- 17: Schraubenführung
- 18: Gewindeschaft
- 19: Freiraum
- 20: Grundkörper
- 21: Gewindebuchsenbauteil
- 22: Sperrscheibe
- 22.1: Fortsatz
- 23: Innengewindeabschnitt
- 24: Außensechskantkontur
- 25: Innensechskantkontur
- 26: Ausnehmung
- 27: Kopf
- 28: Innensechskantkontur

## Patentansprüche

1. Unterflurinstallationsbauteil mit einem vor seinem Einbau in einen insbesondere durch Gießen zu erstellenden Fußboden durch Nivellierschrauben (2) bodenseitig abgestützten Rahmen, welche Nivellierschrauben (2) mit ihrem Gewinde (7) jeweils ein komplementäres Gewinde des Rahmens kämmen, **dadurch gekennzeichnet, dass** das eine Ende einer solchen Nivellierschraube (2) erste Verbindungsmittel und das andere Ende derselben zweite, zu den ersten Verbindungsmitteln komplementäre Verbindungsmittel aufweist, sodass durch In-Eingriff-Stellen der komplementären Verbindungsmittel zweier Nivellierschrauben (2) miteinander eine längere Nivellierschraube bereitgestellt ist, wobei das erste Verbindungsmittel als axiale Anschlussbuchse (5) und das zweite Verbindungsmittel als axialer, von dem diesseitigen Gewindeabschluss abragender Steckzapfen (6) ausgeführt sind, dass den Verbindungsmitteln komplementäre Drehmomentübertrager (11, 12) zugehörig sind, durch die die beiden in Eingriff gestellten Verbindungsmittel zweier Nivellierschrauben (2) drehmomentschlüssig miteinander in Eingriff gestellt sind, dass Haltemittel (8, 9, 10) vorgesehen sind, durch das oder die der Eingriff eines Steckzapfens (6, 6.1) in eine Anschlussbuchse (5) fixiert ist, und dass in der Anschlussbuchse (5) dieser Nivellierschraube (2) zentrisch ein Drehmitnahmezapfen (11) mit nicht-rotationssymmetrischer Mantelfläche als Drehmomentübertrager und in dem Steckzapfen (6) zentrisch eine Drehmitnahmezapfenaufnahme (12) mit einer solchen Querschnittsgeometrie vorgesehen sind, damit in dieser der Drehmitnahmezapfen (11) drehmomentschlüssig aufgenommen ist.

2. Unterflurinstallationsbauteil nach Anspruch 1, **dadurch gekennzeichnet, dass** der Drehmitnahmezapfen (11) eine als Mehrkant, etwa als Sechskant ausgebildete Mantelfläche aufweist.

3. Unterflurinstallationsbauteil nach einem der Ansprüche 1 bis 2, **dadurch gekennzeichnet, dass** die Anschlussbuchse (5) und der Steckzapfen (6) eine mechanische Verbindungskodierung (13, 14) tragen, durch die, bezogen auf die Längsachse, eine winkelrichtige Montage zweier Nivellierschrauben (2) zueinander gewährleistet ist.

4. Unterflurinstallationsbauteil nach Anspruch 3, **dadurch gekennzeichnet, dass** als mechanische Verbindungskodierung das eine Verbindungsmittel eine sich in längsaxialer Richtung erstreckende Nut (13) und das andere Verbindungsmittel einen in die Nut (13) eingreifenden Kodierkörper (14) vorgesehen sind.

5. Unterflurinstallationsbauteil nach Anspruch 4, **dadurch gekennzeichnet, dass** der Steckzapfen (6) die Nut (13) und die Aufnahmebuchse (5) eine von ihrer inneren Mantelfläche abragenden Wulst (14) als Kodierkörper aufweisen.

6. Unterflurinstallationsbauteil nach einem der Ansprüche 1 bis 5, **dadurch gekennzeichnet, dass** der Steckzapfen (6) einen in einer Nut (9) gehaltenen Federstahlring (8) trägt, der zu seiner Fixierung, wenn mit einer Anschlussbuchse (5) in Eingriff gestellt, in eine in deren innere Mantelfläche umlaufend eingebrachte Ringnut (10) eingreift.

7. Unterflurinstallationsbauteil nach Anspruch 4 oder 5, **dadurch gekennzeichnet, dass** die mechanische Verbindungskodierung zugleich die Drehmomentübertrager sind.

8. Unterflurinstallationsbauteil nach einem der Ansprüche 1 bis 7, **dadurch gekennzeichnet, dass** die Nivellierschrauben (2) ein eingängiges Gewinde tragen.

9. Unterflurinstallationsbauteil nach einem der Ansprüche 1 bis 8, **dadurch gekennzeichnet, dass** einer Nivellierschraube (2) ein Fuß (3) zugeordnet ist und dass der Fuß (3) zum Anschließen an die Nivellierschraube (2) eine Schraubenfußaufnahme zum Einsetzen des Steckzapfens (6) der Nivellierschraube (2) aufweist.

10. Unterflurinstallationsbauteil nach einem der Ansprüche 1 bis 9, **dadurch gekennzeichnet, dass** an jeder Nivellierabstützung des Rahmens zumindest zwei endseitig miteinander verbundene Nivellierschrauben (2) als Gewindestangen angeordnet sind.

## Claims

1. An underfloor installation component having a frame, which is to be supported on the floor side by leveling screws (2) before its installation in a floor, which floor is to be created by casting, which leveling screws (2) each mesh with their thread (7) in a complementary thread of the frame, **characterized in that** one end of such a leveling screw (2) has first connecting means and the other end thereof has second connecting means complementary to the first connecting means, so that by engaging the complementary connecting means of two leveling screws (2) with one another, a longer leveling screw is provided, wherein the first connecting means is embodied as an axial connection socket (5) and the second connecting means is embodied as an axial plug-in pin (6) protruding from the threaded end on this side, complementary torque transmitters (11, 12) are associated with the connecting means, by which the two engaged connecting means of two leveling screws (2) are engaged with one another in a torque-locked manner, holding means (8, 9, 10) are provided, by which the engagement of a plug-in pin (6, 6.1) in a connection socket (5) is fixed, and that a rotation-driving pin (11) having non-rotationally symmetrical lateral surface is provided centrally as a torque transmitter in the connection socket (5) of this leveling screw (2) and a rotation-driving pin receptacle (12) is provided centrally in the plug-in pin (6) having a cross-sectional geometry such that the rotation-driving pin (11) is accommodated therein in a torque-locked manner.

2. The underfloor installation component as claimed in claim 1, **characterized in that** the rotation-driving pin (11) has a lateral surface designed as a polygon, for example, as a hexagon.

3. The underfloor installation component as claimed in any one of claims 1 to 2, **characterized in that** the connection socket (5) and the plug-in pin (6) bear a mechanical connecting coding (13, 14), by which, with respect to the longitudinal axis, assembly of two leveling screws (2) at the correct angle in relation to one another is ensured.

4. The underfloor installation component as claimed in claim 3, **characterized in that** a groove (13) extending in the longitudinal-axial direction is provided as the mechanical connecting coding of the one connecting means and a coding body (14) engaging in the groove (13) is provided as the mechanical connecting coding of the other connecting means.

5. The underfloor installation component as claimed in claim 4, **characterized in that** the plug-in pin (6) has the groove (13) and the receptacle socket (5) has a bead (14) protruding from its inner lateral surface as coding bodies.

6. The underfloor installation component as claimed in any one of claims 1 to 5, **characterized in that** the plug-in pin (6) bears a spring steel ring (8), which is held in a groove (9) and which engages in an annular groove (10) introduced circumferentially into its inner lateral surface for its fixing when it is engaged with a connection socket (5).

7. The underfloor installation component as claimed in claim 4 or 5, **characterized in that** the mechanical connecting coding is the torque transmitter at the same time.

8. The underfloor installation component as claimed in any one of claims 1 to 7, **characterized in that** the leveling screws (2) bear a single-pitch thread.

9. The underfloor installation component as claimed in any one of claims 1 to 8, **characterized in that** a base (3) is assigned to a leveling screw (2), and the base (3) has, for connection to the leveling screw (2), a screw base receptacle for inserting the plug-in pin (6) of the leveling screw (2).

10. The underfloor installation component as claimed in any one of claims 1 to 9, **characterized in that** at least two leveling screws (2) connected to one another at their ends are arranged as threaded rods on each leveling support of the frame.

## Revendications

1. Composant d'installation sous plancher comportant un cadre supporté côté sol par des vis de nivellement (2) avant son montage dans un plancher à réaliser notamment par coulage, lesquelles vis de nivellement (2) s'engrènent chacune avec un filetage complémentaire du cadre par leur filetage (7), **caractérisé en ce que** l'une des extrémités d'une telle vis de nivellement (2) présente des premiers moyens de liaison et l'autre extrémité de celle-ci présente des seconds moyens de liaison complémentaires aux premiers moyens de liaison, de sorte qu'une vis de nivellement plus longue est fournie par des points de mise en prise des moyens de liaison complémentaires de deux vis de nivellement (2), dans lequel le premier moyen de liaison est conçu comme une douille de raccordement axiale (5) et le second moyen de liaison est conçu comme une broche de connexion axiale (6) dépassant de l'extrémité filetée de ce côté, **en ce que** les moyens de liaison sont associés à des transmetteurs de couple complémentaires (11, 12), au moyen desquels les deux moyens de liaison mis en prise de deux vis de nivellement (2) sont verrouillés en couple en prise l'un avec l'autre, **en ce que** des moyens de maintien (8, 9, 10) sont prévus, grâce au(x)quel(s) la mise en prise d'une broche de connexion axiale (6, 6.1) est fixée dans une douille de raccordement (5), et **en ce qu'**une goupille d'entraînement rotative (11) avec une surface non symétrique en rotation est prévue au centre dans la douille de raccordement (5) de cette vis de nivellement (2) comme transmetteur de couple, et qu'un réceptacle de goupille d'entraînement rotative (12) avec une telle géométrie de section transversale est prévue au centre de la broche de connexion (6), de sorte que la goupille d'entraînement rotative (11) est verrouillée par couple.

2. Composant d'installation sous plancher selon la revendication 1, **caractérisé en ce que** la goupille d'entraînement rotative (11) présente une surface d'enveloppe réalisée sous la forme d'un polygone, approximativement sous la forme d'un hexagone.

3. Composant d'installation sous plancher selon l'une des revendications 1 à 2, **caractérisé en ce que** la douille de raccordement (5) et la broche de connexion (6) portent un codage de liaison mécanique (13, 14) qui assure, par rapport à l'axe longitudinal, un montage correct de deux vis de nivellement (2) l'une par rapport à l'autre.

4. Composant d'installation sous plancher selon la revendication 3, **caractérisé en ce que,** en tant que codage de liaison mécanique, l'un des moyens de liaison est prévu comme une rainure (13) s'étendant dans la direction axiale longitudinale et l'autre moyen de liaison est prévu comme corps de codage (14) venant en prise dans la rainure (13).

5. Composant d'installation sous plancher selon la revendication 4, **caractérisé en ce que** la broche de connexion (6) présente la rainure (13) et la douille de réception (5) présente un bourrelet (14) faisant saillie de sa surface d'enveloppe intérieure en tant que corps de codage.

6. Composant d'installation sous plancher selon l'une des revendications 1 à 5, **caractérisé en ce que** la broche de connexion (6) porte une bague en acier à ressort (8) maintenue dans une rainure (9), qui, pour sa fixation, vient en prise, lorsqu'elle est mise en prise avec une douille de raccordement (5), dans une rainure annulaire (10) ménagée en périphérie dans une surface d'enveloppe intérieure de celle-ci.

7. Composant d'installation sous plancher selon la revendication 4 ou 5, **caractérisé en ce que** le codage de liaison mécanique est en même temps les transmetteurs de couple.

8. Composant d'installation sous plancher selon l'une des revendications 1 à 7, **caractérisé en ce que** les vis de nivellement (2) portent un filetage débouchant.

9. Composant d'installation sous plancher selon l'une des revendications 1 à 8, **caractérisé en ce qu'**un pied (3) est associé à une vis de nivellement (2) et **en ce que** le pied (3) présente, pour le raccordement à la vis de nivellement (2), un logement de pied de vis pour l'insertion de la broche de connexion (6) de la vis de nivellement (2).

10. Composant d'installation sous plancher selon l'une des revendications 1 à 9, **caractérisé en ce qu'**au moins deux vis de nivellement (2) reliées entre elles à chaque extrémité sont disposées sous forme de tiges filetées sur chaque support de mise à niveau du cadre.
